# EUROPEAN PATENT SPECIFICATION

(11) **EP 4 245 136 B1**
(45) Date of publication and mention of the grant of the patent: **13.11.2024**
(21) Application number: 23161137.7
(22) Date of filing: 10.03.2023
(51) Int. Cl.: A01M 7/00, A01M 9/00

(54) **A PENDULUM SUSPENSION DEVICE OF A SPRAY BOOM AND A METHOD OF ALIGNING A PENDULUM SUSPENSION DEVICE OF A SPRAY BOOM**
PENDELAUFHÄNGUNGSVORRICHTUNG EINES SPRÜHAUSLEGERS UND VERFAHREN ZUR AUSRICHTUNG EINER PENDELAUFHÄNGUNGSVORRICHTUNG EINES SPRÜHAUSLEGERS
DISPOSITIF DE SUSPENSION PENDULAIRE D'UNE RAMPE DE PULVÉRISATION ET PROCÉDÉ D'ALIGNEMENT D'UN DISPOSITIF DE SUSPENSION PENDULAIRE D'UNE RAMPE DE PULVÉRISATION

(30) Priority: 15.03.2022 DK PA202270106
(43) Date of publication of application: 20.09.2023
(73) Proprietor: Exel Industries SA, 51200 Epernay (FR)
(72) Inventor: NIELSEN, Britt, 51200 Epernay (FR); KOK, Allan, 51200 Epernay (FR); FREDERIKSEN, Casper, 51200 Epernay (FR); NEJSUM, Lars, 51200 Epernay (FR)
(74) Representative: Zacco Denmark A/S

(56) References cited:
- EP-B1- 2 932 841
- EP-B1- 3 141 114
- FR-A1- 2 270 774
- US-A1- 2014 015 212

## Description

### Technical field

The present disclosure relates to a pendulum suspension device of a spray boom and a method of aligning a pendulum suspension device of a spray boom. More specifically, the disclosure relates to a pendulum suspension device of a spray boom and a method of aligning a pendulum suspension device of a spray boom as defined in the introductory parts of the independent claims.

### Background art

When spraying, the spray boom will pick up movement around a pendulum point placed on a longitudinal axis running in a driving direction of a carrying vehicle, being a tractor or a self-propelled field or crop sprayer. Over the years, spray booms have become longer and longer, some booms having a spraying width of more than 40 meters. Therefore, a need of dampening oscillations of the spray boom is important to for example avoid the boom to hit the ground and to ensure a substantially constant distance between the spray boom and the crops to be sprayed. Some boom types are capable of operating with one side of the spray boom folded, and the other side unfolded. This moves center of gravity (COG.) of the boom towards the unfolded side, creating a tendency, for the whole sprayer, to lean towards that side. In this situation, the free movement around the pendulum point must be disabled, to avoid the boom from rolling to its extremity. To be able to obtain horizontal positioning of the unfolded boom side, correction between the boom and a chassis of the sprayer/vehicle is needed. Further, when the spray boom is going to be folded into a transport position the boom will have to be aligned with the chassis and free movement around the pendulum point will have to be disabled.

A problem with the solutions of the prior art such as disclosed in US 2014/015212 A1, EP 3 141 114 B1, EP 2 932 841 B1 and FR 2 270 774 A1 is that there are many complex systems for enabling such features, but a simple system capable of controlling the above features is not available. There is thus a need for an improved solution to this problem.

### Summary

It is an object of the present disclosure to mitigate, alleviate or eliminate one or more of the above-identified deficiencies and disadvantages in the prior art and solve at least the above mentioned problem. According to a first aspect there is provided a pendulum suspension device of a spray boom, comprising: a fixed frame intended to be borne by an agricultural machine, a mobile frame intended to bear one or several spray booms, a pendulum suspension connecting rod connected pivotably in an upper pivot point to the fixed frame, said connecting rod connected pivotally in a lower pivot point to the mobile frame, and at least one actuation cylinder in order to displace a center of gravity for the mobile frame including the spray boom relatively to the fixed frame, the actuation cylinder is interposed between the mobile frame and the connecting rod, the pendulum suspension device further comprising a pair of pendulum cylinders placed on each side of the connecting rod, and connected between the fixed frame and the mobile frame, where the pendulum cylinders are hydraulically connected by a hydraulic interconnection and is configured for dampening movement of the fixed frame in relation to the mobile frame via a throttle placed in the hydraulic interconnection.

Hereby it is possible in a simple way to regulate the strength of dampening.

According to some embodiments, the pendulum cylinders are connected hydraulically via a directional control valve for switching between a position of the control valve for movement of the cylinders moving the spray boom and a position for locking of movement of the cylinders.

Hereby it is possible to use same cylinders to control dampening and to control alignment of the spray boom and the mobile frame in relation to the fixed frame.

According to some embodiments, the throttle is an adjustable throttle.

Hereby it is possible to adjust the dampening of movement of the spray boom.

According to some embodiments, the pendulum cylinders are hydraulically separated from rest of the hydraulic circuit by a cut-off valve.

Hereby it is possible to create a local hydraulic circuit operable independently of the rest of the hydraulic circuit and it is possible to switch between such a separate operation mode and a mutual operation mode, where the local hydraulic circuit operates together with the rest of the hydraulic circuit. It is also possible by pressing hydraulic fluid into one cylinder and with the other cylinder connected to a tank, to create a controlled movement around the pendulum point of the spray boom and thereby correcting the angle of the boom compared to the chassis.

According to some embodiments, an angle sensor is provided between the connection bar and the fixed frame.

Hereby it is possible to determine based on readings of signals from the angle sensor the angle between the connection rod and the fixed frame and thereby it is possible to determine when the spray boom and the mobile frame is level in relation to the fixed frame.

According to some embodiments, one or more control valves in a hydraulic circuit is controlled by a controller connected to the agricultural machine.

Hereby it is possible to automatically control the spray boom.

According to some embodiments, at least one of the control valves in the hydraulic circuit is controlled manually.

Hereby it is possible for a tractor pilot to control one or more of the parameters manually.

According to a second aspect there is provided a method of aligning a pendulum suspension device of a spray boom, comprising: a fixed frame intended to be borne by an agricultural machine, a mobile frame intended to bear one or several spray booms, a pendulum suspension connecting rod connected pivotably in an upper pivot point to the fixed frame, said connecting rod connected pivotally in a lower pivot point to the mobile frame, and at least one actuation cylinder in order to displace a center of gravity for the mobile frame including the spray boom relatively to the fixed frame, the actuation cylinder is interposed between the fixed frame and the connecting rod, the pendulum suspension device further comprising a pair of pendulum cylinders placed on each side of the connecting rod, and connected between the fixed frame and the mobile frame, the suspension device controlled by a hydraulic system comprising control valves where the method comprises the steps of: - damping movement of the pendulum cylinders by a throttle valve placed in the hydraulic interconnection between the pendulum cylinders, thereby dampening the movement of the boom, and activating a directional control valve into a position where hydraulic fluid flow from one pendulum cylinder moves the other pendulum cylinder in opposite direction.

Hereby it is possible to achieve a dampening of spray boom oscillations relative to the sprayer in an efficient and simple way.

According to some embodiments, the method comprises the steps of: activating hydraulic fluid flow between pendulum cylinders until an angle sensor shows that connection bar is perpendicular to the fixed frame; leveling the mobile frame in relation to the fixed frame into a transport position by activating left and right pendulum cylinders, locking the frames in relation to each other and separating the pendulum cylinders hydraulically by activating the cut-off valve; and folding spray boom into a folded transport position.

According to some embodiments, the method further comprises the steps of: separating hydraulic fluid flow between pendulum cylinders; pressing hydraulic fluid into one pendulum cylinder and connecting the other pendulum cylinder to a tank to create a controlled movement of the mobile frame around the upper pivot point of the connecting rod.

Hereby it is possible to achieve a safe folding of the spray boom into a transport position ensuring correct placement of the boom.

All in all, an improved system is achieved solving the problems of dampening oscillations of the spray boom, aligning the spray boom, for example before folding into transport position, and correcting angle of the spray boom in relation to the surface to be sprayed.

Effects and features of the second aspect are to a large extent analogous to those described above in connection with the first aspect. Embodiments mentioned in relation to the first aspect are largely compatible with the second aspect.

The present disclosure will become apparent from the detailed description given below. The detailed description and specific examples disclose preferred embodiments of the disclosure by way of illustration only. Those skilled in the art understand from guidance in the detailed description that changes and modifications may be made within the scope of the disclosure.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

Terminology -- The term "carrying the sprayer" is to be interpreted as carried by a tractor lift (three-point suspension), a tractor trailer or a self-propelled field sprayer.

### Brief descriptions of the drawings

The above objects, as well as additional objects, features and advantages of the present disclosure, will be more fully appreciated by reference to the following illustrative and nonlimiting detailed description of example embodiments of the present disclosure, when taken in conjunction with the accompanying drawings.
Figure 1 shows schematically a pendulum suspension device compensating for an uneven field surface;
Figure 2 shows schematically a pendulum suspension device.in an aligned position;
Figure 3 shows schematically a pendulum suspension device, where the spray boom is folded into a transport position;
Figure 4 shows a simplified hydraulic diagram for controlling the pendulum suspension device, when the spray boom is in folding or transport position;
Figure 5 shows a simplified hydraulic diagram for controlling the pendulum suspension device, when the spray boom is in spraying position with damping enabled; and
Figure 6 shows a simplified hydraulic diagram for controlling the pendulum suspension device, when the system is in alignment or correction configuration.

### Detailed description

The present disclosure will now be described with reference to the accompanying drawings, in which preferred example embodiments of the disclosure are shown. The disclosure may, however, be embodied in other forms and should not be construed as limited to the herein disclosed embodiments. The disclosed embodiments are provided to fully convey the scope of the disclosure to the skilled person.

The first aspect of this disclosure shows a pendulum suspension device 1 of a spray boom 2, comprising: a fixed frame 3 intended to be borne by an agricultural machine, a mobile frame 4 intended to bear one or several spray booms 2, a pendulum suspension connecting rod 5 connected pivotably in an upper pivot point 7 to the fixed frame 3, the connecting rod 5 connected pivotally in a lower pivot point 8 to the mobile frame 4, and at least one actuation cylinder 6 in order to displace a center of gravity for the mobile frame 4 including the spray boom 2 relatively to the fixed frame 3, the actuation cylinder 6 is interposed between the mobile frame 4 and the connecting rod 5, the pendulum suspension device 1 further comprising a pair of pendulum cylinders 9, 10 placed on each side of the connecting rod 5, and connected between the fixed frame 3 and the mobile frame 4, where the pendulum cylinders 9, 10 is hydraulically connected by a hydraulic interconnection 19 and is configured for dampening movement of the fixed frame 3 in relation to the mobile frame 4 via a throttle 15 placed in the hydraulic interconnection 19.

In an embodiment, the pendulum cylinders 9, 10 are connected hydraulically via a directional control valve 16 for switching between a position of the control valve 16 for movement of the cylinders 9, 10 moving the spray boom 2 and a position for locking of movement of the cylinders 9, 10. The cylinders 9, 10 are connected and operated by a hydraulic system comprising a circuit 14.

The throttle 15 can be a fixed throttle and in an embodiment, the throttle 15 is an adjustable throttle 15, which throttle 15 can also be mechanically or electronically remotely operated based on external input, for example from GPS signals, demographic charts, topographic charts or the like. Input can also be provided by user of the agricultural vehicle.

Hereby it is possible to let the adjustable throttle 15 be operated by an operator of the agricultural vehicle or by a controller connected to the agricultural vehicle.

In an aspect, the function of the adjustable throttle 15 can be integrated into the directional control valve 16. As an example, the directional control valve, can then be a proportional valve (not shown). Hereby it is possible to let the proportional valve control connection between the pendulum cylinders 9, 10 and at the same time adjust dampening of the spray boom 2 by adjusting flow between the pendulum cylinders 9, 10.

In an embodiment, the pendulum cylinders 9, 10 are hydraulically separated from rest of the system by a cut-off valve 17.

In an embodiment, an angle sensor 13 is provided between the pendulum suspension connecting rod 5 and the fixed frame 3.

In an embodiment, one or more control valves 15, 16, 17, 18 in a hydraulic circuit 14 is controlled by a controller connected to the agricultural machine.

In an embodiment, at least one of the control valves 15, 16, 17, 18 in the hydraulic circuit 14 is controlled manually.

The second aspect of this disclosure shows a method of aligning a pendulum suspension device 1 of a spray boom 2, comprising: a fixed frame 3 intended to be borne by an agricultural machine, a mobile frame 4 intended to bear one or several spray booms 2, a pendulum suspension connecting rod 5 connected pivotably in an upper pivot point 7 to the fixed frame 3, the connecting rod 5 connected pivotally in a lower pivot point 8 to the mobile frame 4, and at least one actuation cylinder 6 in order to displace a center of gravity for the mobile frame 4 including the spray boom 2 relatively to the fixed frame 3, the actuation cylinder 6 is interposed between the mobile frame 4 and the connecting rod 5, the pendulum suspension device 1 further comprising a pair of pendulum cylinders 9, 10 placed on each side of the connecting rod 5, and connected between the fixed frame 3 and the mobile frame 4, the suspension device 1 controlled by a hydraulic system comprising control valves 15, 16, 17, 18 where the method comprises the steps of: - damping movement of the pendulum cylinders 9,10 by a throttle valve 15 placed in the hydraulic interconnection between the pendulum cylinders 9, 10, thereby dampening the movement of the boom 2, and - activating a directional control valve 16 into a position where hydraulic fluid flow from one pendulum cylinder 9, 10 moves the other pendulum cylinder 9, 10 in opposite direction.

In an embodiment, the method comprises the steps of: activating hydraulic fluid flow between pendulum cylinders 9, 10 until angle sensor 13 shows that connection bar 5 is perpendicular to fixed frame 3; leveling the mobile frame 4 in relation to the fixed frame 3 into a transport position by activating left and right pendulum cylinders 9, 10; locking the frames 3, 4 in relation to each other and separating the pendulum cylinders hydraulically by activating the cut-off valve 17; and folding spray boom 2 into a folded transport position.

In an embodiment, the method further comprises the steps of: separating hydraulic fluid flow between pendulum cylinders 9, 10; pressing hydraulic fluid into one pendulum cylinder 9, 10 and connecting the other pendulum cylinder 9, 10 to a tank (T) to create a controlled movement of the mobile frame around the upper pivot point 7 of the connecting rod 5.

This method is advantageous when one or more elements of the spray boom 2 on one side is folded, whereby center of gravity will be displaced and a tendency of inclining of the spray boom 2 to the other side will occur. The method makes it possible to compensate for displacement of the center of gravity and to align the spray boom 2 with the field surface.

In the figures, only inner portions of spray booms 2 are shown. The spray boom 2 can on each side of the fixed frame 3 be provided by a number of foldable booms 2 maneuverable or foldable in relation to each other by means of hydraulic cylinders 11, 12, using wire pull or similar mechanisms

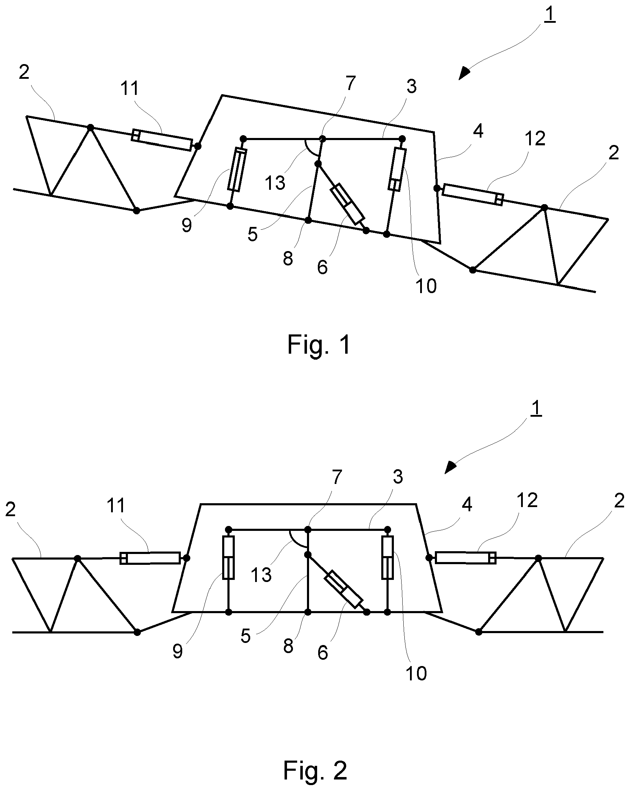

Figure 1 shows the pendulum suspension device 1 in a situation where a vehicle carrying a sprayer provided with the pendulum suspension device 1 is configured for normal spraying where the center of gravity for the spray boom 2 can swing around the upper pendulum point 7 and only limited (damped) by hydraulic fluid being pushed back and forth between the two pendulum cylinders 9, 10 over the throttle 15.

In figure 2, the spray boom 2 and the mobile frame 4 is aligned with the fixed frame 3 and the connecting rod 5 is substantially perpendicular to the fixed frame 3, which can be verified by the angle sensor 13.

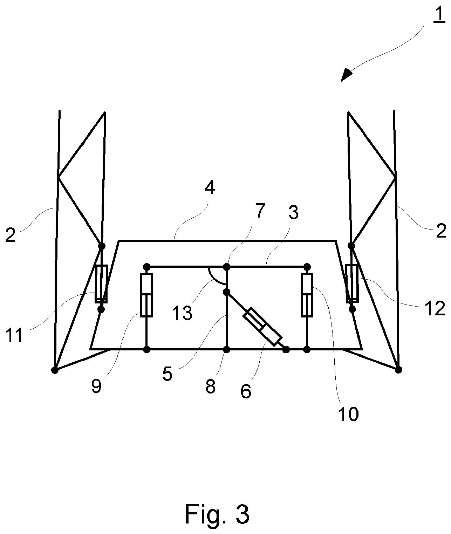

In figure 3, the spray booms 2 are folded into a transport position by activating left and right boom cylinders 11, 12 after, or at the same time activating the left and right pendulum cylinders 9, 10 to align the mobile frame 4 with the spray booms 2. The angle sensor 13 gives a reading from which it can be determined if or when the mobile frame 4 is aligned with the fixed frame 3.

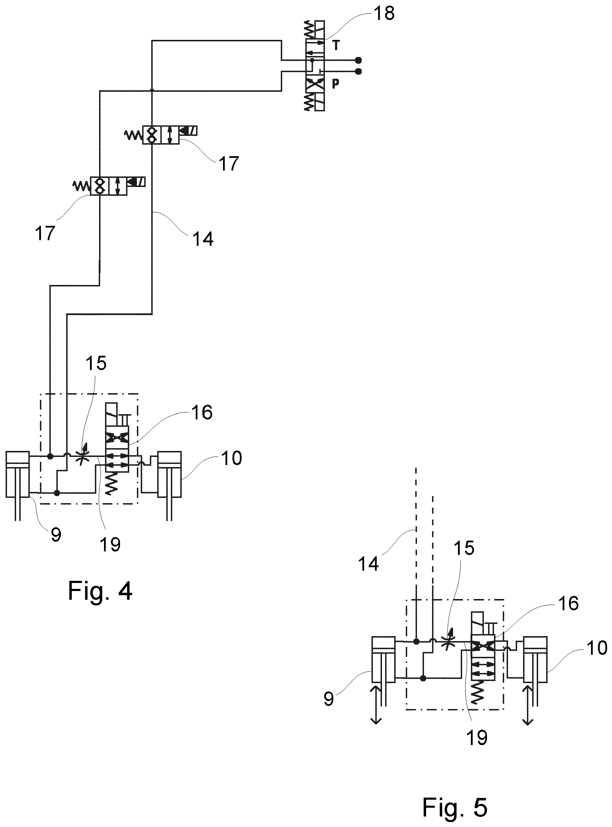

In figure 4 a simplified hydraulic circuit 14 is shown, where the pendulum cylinders 9, 10 are hydraulically separable connected by cut-off valves 17 capable of opening or closing for hydraulic fluid to the pendulum cylinders 9, 10. Fluid direction between the cylinders 9, 10, which cylinders preferably are double action cylinders can be changed by a directional control valve 16 and a throttle 15 placed in a hydraulic interconnection 19 between the pendulum cylinders 9, 10. The throttle 15 controls the dampening of the mobile frame 4 in relation to the fixed frame 3. A pump pressure control valve 18 is configured for control of the hydraulic fluid between pump (P), tank (T) and the hydraulic circuit 14. The directional valve 16 is switched to direct hydraulic fluid into the pendulum cylinders 9, 10 in order to let the cylinders 9, 10 act in opposite directions.

When the directional valve 16 is switched to direct hydraulic fluid into the pendulum cylinders 9, 10 in order to let the cylinders 9, 10 act in opposite directions, and the cut-off valves 17 are closed to separate the pendulum cylinders 9, 10 from the rest of the hydraulic system, movement of one pendulum cylinder 9, 10 will cause similar movement in the opposite direction of the other pendulum cylinder 9, 10 and the movement can be damped by the throttle 15. Shifting the directional valve 16 to direct hydraulic fluid into the pendulum cylinders 9, 10 in order to let the cylinders 9, 10 act in same direction, and still with the cut-off valves 17 closed, the movement of the cylinders 9, 10 are locked.

In figure 5 is shown same circuit 14 as in figure 4, but here the directional valve 16 is switched to direct hydraulic fluid into the pendulum cylinders 9, 10 in order to let the cylinders act in same direction.

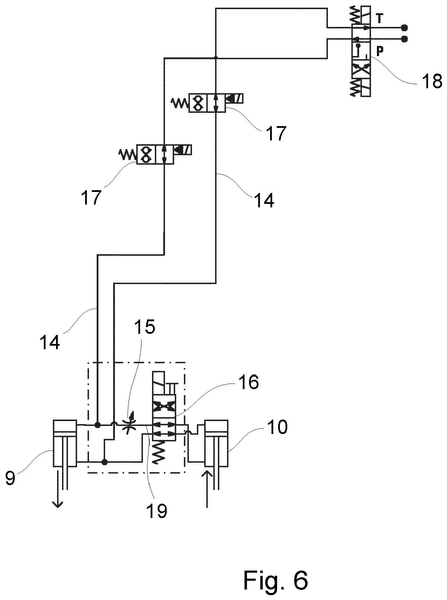

In figure 6, the circuit 14 is shown with the cut-off valves 17 open and the pump pressure control valve 18 switched whereby the pendulum cylinders 9, 10 are in hydraulic connection with the pump (P) and the tank (T).

The slant cylinder 6 can be used to displace the center of gravity by increasing or decreasing an angle between the connecting rod 5 which is pivotable connected to the mobile frame 4 in a lower pivot point 8. By use of the slant cylinder 6, the spray boom 2 can be displaced sideways in relation to the fixed frame 3 and thereby in relation to the carrying vehicle.

When folding the boom, the center must also be locked so that it does not "mis-align" during uneven folding, whereby the center of gravity of the boom is displaced. The boom and center must be locked so that the boom remains in transport brackets during road transport.

Transport brackets (not shown) can be a substantially vertical pin which is positioned in an opening in such a way that the opening is placed for example in a substantially horizontal flange extending from the fixed frame 3 or a part in fixed connection with the fixed frame 3 on the field sprayer and the pin is placed on a section on the spray boom 2, which section is placed close to and corresponding to the flange, when the spray boom 2 is in folded position. When the spray boom 2 is folded and the pin is placed just above the opening in the flange, the spray boom 2 can be lowered in substantially vertical or upright position by use of a sliding frame (not shown) for moving the mobile frame 4 and/or the fixed frame 3 including the spray boom 2 in a substantially vertical direction. This sliding frame can also be used for changing distance between spray boom 2 and the crops to be sprayed.

The weight of the spray boom 2 keeps the pin engaged with the opening. It can be further secured by locking the fixed 3 and mobile frame 4 in relation to each other so that the spray boom 2 remains in the transport brackets during road transport.

Locking the frames 3, 4 in relation to each other can be done by closing a valve 17 or by blocking or closing the throttle 15 in such a way that pistons in the pendulum cylinders 9, 10 cannot move or only can move a very short distance.

Hereby it is secured that the spray boom 2 remains in the transport brackets (not shown) during road transport.

The person skilled in the art realizes that the present disclosure is not limited to the preferred embodiments described above. The person skilled in the art further realizes that modifications and variations are possible within the scope of the appended claims. For example, the spray boom can on each side of the fixed frame be provided by a number of foldable booms maneuverable or foldable in relation to each other by means of hydraulic cylinders, using wire pull or similar mechanisms. Additionally, variations to the disclosed embodiments can be understood and effected by the skilled person in practicing the claimed disclosure, from a study of the drawings, the disclosure, and the appended claims.

## Claims

1. A pendulum suspension device (1) of a spray boom (2), comprising: a fixed frame (3) intended to be borne by an agricultural machine, a mobile frame (4) intended to bear one or several spray booms (2), a pendulum suspension connecting rod (5) connected pivotably in an upper pivot point (7) to the fixed frame (3), said connecting rod (5) connected pivotally in a lower pivot point (8) to the mobile frame (4), and at least one actuation cylinder (6) in order to displace a center of gravity for the mobile frame (4) including the spray boom (2) relatively to said fixed frame (3), said actuation cylinder (6) is interposed between said mobile frame (4) and said connecting rod (5), the pendulum suspension device (1) further comprising a pair of pendulum cylinders (9, 10) placed on each side of the connecting rod (5), and connected between the fixed frame (3) and the mobile frame (4), **characterized in that** the pendulum cylinders (9, 10) is hydraulically connected by a hydraulic interconnection (19) and is configured for dampening movement of the fixed frame (3) in relation to the mobile frame (4) via a throttle (15) placed in the hydraulic interconnection (19).

2. The pendulum suspension device according to claim 1, wherein the pendulum cylinders (9, 10) are connected hydraulically via a directional control valve (16) for switching between a position of the control valve (16) for movement of the cylinders (9, 10) moving the spray boom (2) and a position for locking of movement of the cylinders (9, 10).

3. The pendulum suspension device according to claim 1, wherein the throttle (15) is an adjustable throttle (15).

4. The pendulum suspension device according to any one or more of the claims 1, 2 or 3, wherein the pendulum cylinders (9, 10) are hydraulically separated from rest of a hydraulic circuit (14) by a cut-off valve (17).

5. The pendulum suspension device according to one or more of the claims 1 - 4, wherein an angle sensor (13) is provided between the pendulum suspension connecting rod (5) and the fixed frame (3).

6. The pendulum suspension device according to one or more of the claims 1 - 5, wherein one or more control valves (15, 16, 17, 18) in a hydraulic circuit (14) is controlled by a controller connected to the agricultural machine.

7. The pendulum suspension device according to one or more of the claims 1 - 5, wherein at least one of the control valves (15, 16, 17, 18) in a hydraulic circuit (14) is controlled manually.

8. A method of aligning a pendulum suspension device (1) of a spray boom (2), comprising: a fixed frame (3) intended to be borne by an agricultural machine, a mobile frame (4) intended to bear one or several spray booms (2), a pendulum suspension connecting rod (5) connected pivotably in an upper pivot point (7) to the fixed frame (3), said connecting rod (5) connected pivotally in a lower pivot point (8) to the mobile frame (4), and at least one actuation cylinder (6) in order to displace a center of gravity for the mobile frame (4) including the spray boom (2) relatively to said fixed frame (3), said actuation cylinder (6) is interposed between said mobile frame (4) and said connecting rod (5), the pendulum suspension device (1) further comprising a pair of pendulum cylinders (9, 10) placed on each side of the connecting rod (5), and connected between the fixed frame (3) and the mobile frame (4), said suspension device (1) controlled by a hydraulic system comprising control valves (15, 16, 17, 18) where the method comprises the steps of:
- damping of movement of the pendulum cylinders (9, 10) by a throttle valve (15) placed in the hydraulic interconnection (19) between the pendulum cylinders (9, 10), thereby dampening the movement of the boom (2), and
- activating a directional control valve (16) into a position where hydraulic fluid flow from one pendulum cylinder (9, 10) moves the other pendulum cylinder (9, 10) in opposite direction.

9. The method according to claim 8, further comprising the steps of:
- activating hydraulic fluid flow between pendulum cylinders (9, 10) until an angle sensor (13) shows that connection bar (5) is perpendicular to fixed frame (3);
- leveling the mobile frame (4) in relation to the fixed frame (3) into a transport position by activating left and right pendulum cylinders (9, 10);
- locking the frames (3, 4) in relation to each other and separating the pendulum cylinders hydraulically by activating the cut-off valve (17); and
- folding spray boom (2) into a folded transport position;

10. The method according to claim 8 further comprising the steps of:
- separating hydraulic fluid flow between pendulum cylinders (9, 10);
- pressing hydraulic fluid into one pendulum cylinder (9, 10) and connecting the other pendulum cylinder (9, 10) to a tank (T) to create a controlled movement of the mobile frame around the upper pivot point (7) of the connecting rod (5).

## Patentansprüche

1. Pendelaufhängungsvorrichtung (1) eines Sprühauslegers (2), umfassend: einen festen Rahmen (3), der dazu gedacht ist, durch eine Landwirtschaftsmaschine getragen zu werden, einen mobilen Rahmen (4), der dazu gedacht ist, einen oder mehrere Sprühausleger (2) zu tragen, eine Pendelaufhängungsverbindungsstange (5), die an einem oberen Schwenkpunkt (7) schwenkbar mit dem festen Rahmen (3) verbunden ist, wobei die Verbindungsstange (5) an einem unteren Schwenkpunkt (8) schwenkbar mit dem mobilen Rahmen (4) verbunden ist, und mindestens einen Betätigungszylinder (6), um einen Schwerpunkt für den mobilen Rahmen (4), einschließlich des Sprühauslegers (2), relativ zu dem festen Rahmen (3) zu verschieben, wobei der Betätigungszylinder (6) zwischen dem mobilen Rahmen (4) und der Verbindungsstange (5) angeordnet ist, wobei die Pendelaufhängungsvorrichtung (1) ferner ein Paar Pendelzylinder (9, 10) umfasst, die auf jeder Seite der Verbindungsstange (5) platziert und zwischen dem festen Rahmen (3) und dem mobilen Rahmen (4) verbunden sind, **dadurch gekennzeichnet, dass** die Pendelzylinder (9, 10) durch eine Hydraulikverbindung (19) hydraulisch verbunden sind und zum Dämpfen einer Bewegung des festen Rahmens (3) in Bezug auf den mobilen Rahmen (4) über eine Drossel (15), die in der Hydraulikverbindung (19) platziert ist, konfiguriert sind.

2. Pendelaufhängungsvorrichtung nach Anspruch 1, wobei die Pendelzylinder (9, 10) über ein Richtungssteuerventil (16) zum Wechseln zwischen einer Position des Steuerventils (16) für eine Bewegung der Zylinder (9, 10), die den Sprühausleger (2) bewegen, und einer Position zum Blockieren einer Bewegung der Zylinder (9, 10) hydraulisch verbunden sind.

3. Pendelaufhängungsvorrichtung nach Anspruch 1, wobei die Drossel (15) eine einstellbare Drossel (15) ist.

4. Pendelaufhängungsvorrichtung nach einem oder mehreren der Ansprüche 1, 2 oder 3, wobei die Pendelzylinder (9, 10) durch ein Absperrventil (17) hydraulisch von einem Rest eines Hydraulikkreises (14) getrennt sind.

5. Pendelaufhängungsvorrichtung nach einem oder mehreren der Ansprüche 1-4, wobei ein Winkelsensor (13) zwischen der Pendelaufhängungsverbindungsstange (5) und dem festen Rahmen (3) bereitgestellt ist.

6. Pendelaufhängungsvorrichtung nach einem oder mehreren der Ansprüche 1-5, wobei ein oder mehrere Steuerventile (15, 16, 17, 18) in einem Hydraulikkreis (14) durch eine Steuerung gesteuert werden, die mit der Landwirtschaftsmaschine verbunden ist.

7. Pendelaufhängungsvorrichtung nach einem oder mehreren der Ansprüche 1-5, wobei mindestens eines der Steuerventile (15, 16, 17, 18) in einem Hydraulikkreis (14) manuell gesteuert wird.

8. Verfahren zum Ausrichten einer Pendelaufhängungsvorrichtung (1) eines Sprühauslegers (2), umfassend: einen festen Rahmen (3), der dazu gedacht ist, durch eine Landwirtschaftsmaschine getragen zu werden, einen mobilen Rahmen (4), der dazu gedacht ist, einen oder mehrere Sprühausleger (2) zu tragen, eine Pendelaufhängungsverbindungsstange (5), die an einem oberen Schwenkpunkt (7) schwenkbar mit dem festen Rahmen (3) verbunden ist, wobei die Verbindungsstange (5) an einem unteren Schwenkpunkt (8) schwenkbar mit dem mobilen Rahmen (4) verbunden ist, und mindestens einen Betätigungszylinder (6), um einen Schwerpunkt für den mobilen Rahmen (4), einschließlich des Sprühauslegers (2), relativ zu dem festen Rahmen (3) zu verschieben, wobei der Betätigungszylinder (6) zwischen dem mobilen Rahmen (4) und der Verbindungsstange (5) angeordnet ist, wobei die Pendelaufhängungsvorrichtung (1) ferner ein Paar Pendelzylinder (9, 10) umfasst, die auf jeder Seite der Verbindungsstange (5) platziert und zwischen dem festen Rahmen (3) und dem mobilen Rahmen (4) verbunden sind, wobei die Aufhängungsvorrichtung (1) durch ein Hydrauliksystem, das Steuerventile (15, 16, 17, 18) umfasst, gesteuert wird, wobei das Verfahren die folgenden Schritte umfasst:
- Dämpfen einer Bewegung der Pendelzylinder (9, 10) durch ein Drosselventil (15), das in der Hydraulikverbindung (19) zwischen den Pendelzylindern (9, 10) platziert ist, wodurch die Bewegung des Auslegers (2) gedämpft wird, und
- Aktivieren eines Richtungssteuerventils (16) in eine Position, in der ein Hydraulikfluidstrom aus einem Pendelzylinder (9, 10) den anderen Pendelzylinder (9, 10) in eine entgegengesetzte Richtung bewegt.

9. Verfahren nach Anspruch 8, ferner umfassend die folgenden Schritte:
- Aktivieren eines Hydraulikfluidstroms zwischen den Pendelzylindern (9, 10), bis ein Winkelsensor (13) zeigt, dass die Verbindungsstange (5) senkrecht zu dem festen Rahmen (3) verläuft;
- Nivellieren des mobilen Rahmens (4) in Bezug auf den festen Rahmen (3) in eine Transportposition durch Aktivieren von linken und rechten Pendelzylindern (9, 10);
- Blockieren der Rahmen (3, 4) in Bezug aufeinander und hydraulisches Trennen der Pendelzylinder durch Aktivieren des Absperrventils (17); und
- Zusammenklappen des Sprühauslegers (2) in eine zusammengeklappte Transportposition.

10. Verfahren nach Anspruch 8, ferner umfassend die folgenden Schritte:
- Trennen des Hydraulikfluidstroms zwischen den Pendelzylindern (9, 10);
- Drücken von Hydraulikfluid in einen Pendelzylinder (9, 10) und Verbinden des anderen Pendelzylinders (9, 10) mit einem Tank (T), um eine gesteuerte Bewegung des mobilen Rahmens um den oberen Schwenkpunkt (7) der Verbindungsstange (5) zu erzeugen.

## Revendications

1. Dispositif de suspension pendulaire (1) d'une rampe de pulvérisation (2), comprenant : un châssis fixe (3) destiné à être porté par une machine agricole, un châssis mobile (4) destiné à porter une ou plusieurs rampes de pulvérisation (2), une bielle (5) de suspension pendulaire reliée de manière pivotante en un point de pivot supérieur (7) au châssis fixe (3), ladite bielle (5) étant reliée de manière pivotante en un point de pivot inférieur (8) au châssis mobile (4), et au moins un vérin d'actionnement (6) afin de déplacer un centre de gravité du châssis mobile (4) comportant la rampe de pulvérisation (2) par rapport audit châssis fixe (3), ledit vérin d'actionnement (6) est interposé entre ledit châssis mobile (4) et ladite bielle (5), le dispositif de suspension pendulaire (1) comprenant en outre une paire de vérins pendulaires (9, 10) placés de chaque côté de la bielle (5), et reliés entre le châssis fixe (3) et le châssis mobile (4), **caractérisé en ce que** les vérins pendulaires (9, 10) sont reliés hydrauliquement par un raccordement hydraulique (19) et sont configurés pour amortir le mouvement du châssis fixe (3) par rapport au châssis mobile (4) par l'intermédiaire d'un étrangleur (15) placé dans le raccordement hydraulique (19).

2. Dispositif de suspension pendulaire selon la revendication 1, dans lequel les vérins pendulaires (9, 10) sont reliés hydrauliquement par l'intermédiaire d'une soupape de commande directionnelle (16) pour commuter entre une position de la soupape de commande (16) pour le mouvement des vérins (9, 10) déplaçant la rampe de pulvérisation (2) et une position pour le verrouillage du mouvement des vérins (9, 10).

3. Dispositif de suspension pendulaire selon la revendication 1, dans lequel l'étrangleur (15) est un étrangleur (15) réglable.

4. Dispositif de suspension pendulaire selon l'une quelconque ou plusieurs des revendications 1, 2 ou 3, dans lequel les vérins pendulaires (9, 10) sont séparés hydrauliquement du reste d'un circuit hydraulique (14) par une soupape de coupure (17).

5. Dispositif de suspension pendulaire selon une ou plusieurs des revendications 1 à 4, dans lequel un capteur d'angle (13) est prévu entre la bielle (5) de suspension pendulaire et le châssis fixe (3).

6. Dispositif de suspension pendulaire selon une ou plusieurs des revendications 1 à 5, dans lequel une ou plusieurs soupapes de commande (15, 16, 17, 18) dans un circuit hydraulique (14) sont commandées par un dispositif de commande relié à la machine agricole.

7. Dispositif de suspension pendulaire selon une ou plusieurs des revendications 1 à 5, dans lequel au moins l'une des soupapes de commande (15, 16, 17, 18) dans un circuit hydraulique (14) est commandée manuellement.

8. Procédé d'alignement d'un dispositif de suspension pendulaire (1) d'une rampe de pulvérisation (2), comprenant : un châssis fixe (3) destiné à être porté par une machine agricole, un châssis mobile (4) destiné à porter une ou plusieurs rampes de pulvérisation (2), une bielle (5) de suspension pendulaire reliée de manière pivotante en un point de pivot supérieur (7) au châssis fixe (3), ladite bielle (5) étant reliée de manière pivotante en un point de pivot inférieur (8) au châssis mobile (4), et au moins un vérin d'actionnement (6) afin de déplacer un centre de gravité du châssis mobile (4) comportant la rampe de pulvérisation (2) par rapport audit châssis fixe (3), ledit vérin d'actionnement (6) est interposé entre ledit châssis mobile (4) et ladite bielle (5), le dispositif de suspension pendulaire (1) comprenant en outre une paire de vérins pendulaires (9, 10) placés de chaque côté de la bielle (5), et reliés entre le châssis fixe (3) et le châssis mobile (4), ledit dispositif de suspension (1) commandé par un système hydraulique comprenant des soupapes de commande (15, 16, 17, 18) où le procédé comprend les étapes :
- d'amortissement du mouvement des vérins pendulaires (9, 10) par une soupape d'étranglement (15) placée dans le raccordement hydraulique (19) entre les vérins pendulaires (9, 10), amortissant ainsi le mouvement de la rampe (2), et
- d'activation d'une soupape de commande directionnelle (16) dans une position où l'écoulement de fluide hydraulique provenant d'un vérin pendulaire (9, 10) déplace l'autre vérin pendulaire (9, 10) dans une direction opposée.

9. Procédé selon la revendication 8, comprenant en outre les étapes :
- d'activation de l'écoulement de fluide hydraulique entre des vérins pendulaires (9, 10) jusqu'à ce qu'un capteur d'angle (13) indique que la barre de liaison (5) est perpendiculaire au châssis fixe (3) ;
- de mise à niveau du châssis mobile (4) par rapport au châssis fixe (3) dans une position de transport en activant des vérins pendulaires (9, 10) gauche et droit ;
- de verrouillage des châssis (3, 4) l'un par rapport à l'autre et de séparation des vérins pendulaires hydrauliquement en activant la soupape de coupure (17) ; et
- de repliage de la rampe de pulvérisation (2) en position de transport repliée.

10. Procédé selon la revendication 8, comprenant en outre les étapes :
- de séparation de l'écoulement de fluide hydraulique entre des vérins pendulaires (9, 10) ;
- de pressage de fluide hydraulique dans un vérin pendulaire (9, 10) et de liaison de l'autre vérin pendulaire (9, 10) à un réservoir (T) pour créer un mouvement commandé du châssis mobile autour du point de pivot supérieur (7) de la bielle (5).
